# EUROPEAN PATENT APPLICATION

(11) **EP 4 586 244 A1**
(43) Date of publication of application: **16.07.2025**
(21) Application number: 23871325.9
(22) Date of filing: 20.06.2023
(51) Int. Cl.: G10L 15/28, G10L 15/00, G10L 15/10

(54) **INFORMATION PROCESSING DEVICE, INFORMATION PROCESSING METHOD, AND PROGRAM**

(30) Priority: 30.09.2022 JP 2022158479
(71) Applicant: Pioneer Corporation, Tokyo 113-0021 (JP)
(72) Inventor: NAKATA Hiroaki, Kawagoe-shi, Saitama 350-8555 (JP); ONISHI Katsunori, Kawagoe-shi, Saitama 350-8555 (JP); NAGATA Hitoshi, Kawagoe-shi, Saitama 350-8555 (JP)
(74) Representative: Vossius & Partner Patentanwälte Rechtsanwälte mbB
(86) International application number: PCT/JP2023/022831
(87) International publication number: WO 2024/070080

(57) **Abstract**

An information processing device (1) includes an output control unit (10), an input unit (20), a determination unit (30), and a mode setting unit (40). The output control unit (10) is configured to output question information regarding presence or absence of a passenger in a mobile body. The input unit (20) is configured to receive answer information regarding an answer of an occupant to the question information. The determination unit (30) is configured to determine whether or not there is a passenger in the mobile body by using the answer information. The mode setting unit (40) is configured to determine by using a determination result of the determination unit (30), which of a first mode in which the information processing device (1) operates as a voice recognition device when a first keyword is detected or a second mode in which the information processing device (1) operates as the voice recognition device even when the first keyword is not detected is to be applied.

## Description

### TECHNICAL FIELD

The present invention relates to an information processing device, an information processing method, and a program.

### BACKGROUND ART

Patent Document 1 (Japanese Unexamined Patent Publication No. 2020-148805) discloses a technique for detecting the number of people in the vicinity and omitting a trigger word for enabling voice recognition in a case where the detected number of people in the vicinity is one.

Patent Document 2 (International Publication No. WO2017/042906) discloses a technique for determining whether the number of speakers in a vehicle is plural or singular and changing a voice recognition method depending on the number of people in the vehicle.

### RELATED DOCUMENT

### PATENT DOCUMENT

[Patent Document 1] Japanese Unexamined Patent Publication No. 2020-148805
[Patent Document 2] International Publication No. WO2017/042906

### SUMMARY OF THE INVENTION

### TECHNICAL PROBLEM

There is known a technique for requesting a voice recognition device to execute a predetermined command (such as route guidance) using a wake-up word (= trigger word) in causing the voice recognition device to perform voice recognition. In particular, when there are a plurality of speakers, there is a possibility that the voice recognition device erroneously recognizes an unintended voice (command), resulting in an unintended command being requested of the voice recognition device. Therefore, the erroneous recognition of the voice recognition device is suppressed by using the wake-up word for the voice recognition.

On the other hand, in a case where there is only one speaker, the possibility of the erroneous voice recognition of the voice recognition device is reduced, so that it is very troublesome to use the wake-up word each time the voice recognition device receives a request for the command execution.

Patent Document 1 discloses that a voice is acquired, the number of people in the vicinity is detected based on the voice, and in a case where the detected number of people is one, the subsequent voice processing is executed without recognizing the trigger word. However, it is difficult to analyze sound information of an inside of the vehicle, which includes audio sounds, engine sounds, voices of a plurality of speakers, and the like, and to accurately detect the number of people in the vehicle based on the sound information.

In addition, Patent Document 2 discloses determining the number of occupants in the vehicle by using a camera or a pressure sensor installed in the vehicle. However, it is difficult to accurately detect whether the number of occupants in the vehicle is singular or plural because a passenger may not be clearly caught on the camera or may have left a luggage in the vehicle. Furthermore, when the number of people is erroneously detected, the voice recognition device is more likely to operate unintentionally, which disrupts a comfortable drive.

An object of the present invention is to provide an information processing device that can realize a comfortable drive while suppressing erroneous voice recognition.

### SOLUTION TO PROBLEM

According to a first aspect of the present invention, there is provided an information processing device including: an output control unit configured to output question information regarding presence or absence of a passenger in a mobile body; an input unit configured to receive answer information regarding an answer of an occupant to the question information; a determination unit configured to determine whether or not there is a passenger in the mobile body by using the answer information; and a mode setting unit configured to determine, by using a determination result of the determination unit, which of a first mode in which the information processing device operates as a voice recognition device when a first keyword is detected or a second mode in which the information processing device operates as the voice recognition device even when the first keyword is not detected is to be applied.

According to a second aspect of the present invention, there is provided an information processing method executed by a computer that implements an information processing device, the method including: outputting question information regarding presence or absence of a passenger in a mobile body; receiving answer information regarding an answer of an occupant to the question information; determining whether or not there is a passenger in the mobile body by using the answer information; and determining, by using a determination result as to whether or not there is a passenger in the mobile body, which of a first mode in which the information processing device operates as a voice recognition device when a predetermined keyword is detected or a second mode in which the information processing device operates as the voice recognition device even when the keyword is not detected is to be applied.

According to a third aspect of the present invention, there is provided a program for causing a computer that implements an information processing device to execute: a processing of outputting question information regarding presence or absence of a passenger in a mobile body; a procedure of receiving answer information regarding an answer of an occupant to the question information; a procedure of determining whether or not there is a passenger in the mobile body by using the answer information; and a procedure of determining, by using a determination result as to whether or not there is a passenger in the mobile body, which of a first mode in which the information processing device operates as a voice recognition device when a predetermined keyword is detected or a second mode in which the information processing device operates as the voice recognition device even when the keyword is not detected is to be applied.

### BRIEF DESCRIPTION OF THE DRAWINGS

Fig. 1 is a block diagram showing an outline of an information processing device according to a first embodiment.
Fig. 2 is a diagram showing a hardware configuration example of the information processing device.
Fig. 3 is a flowchart showing a process in which the information processing device according to the first embodiment applies a first mode or a second mode.
Fig. 4 is a block diagram showing an outline of the information processing device according to a second embodiment.
Fig. 5 is a flowchart of a process in which a storage processing unit according to the second embodiment stores mode determination information in a storage unit.
Fig. 6 is a flowchart of a process in which the information processing device applies the first mode or the second mode using the mode determination information.
Fig. 7 is a block diagram describing functions of an input unit and a storage processing unit according to a fourth embodiment.

### DESCRIPTION OF EMBODIMENTS

Hereinafter, embodiments of the present invention will be described with reference to the drawings. In all drawings, the same components are denoted by the same reference numerals, and description thereof will not be repeated.

In the following description, each component of each device is represented as a block of a functional unit, not as a hardware unit configuration. Each component of each device is implemented by any combination of software and hardware centering on a CPU, a memory, a program loaded in the memory, a storage medium such as a hard disk for storing the program, and an interface for network connection of any computer. There are various modification examples in an implementation method of the component and the device.

### [First Embodiment]

### (Information Processing Device 1)

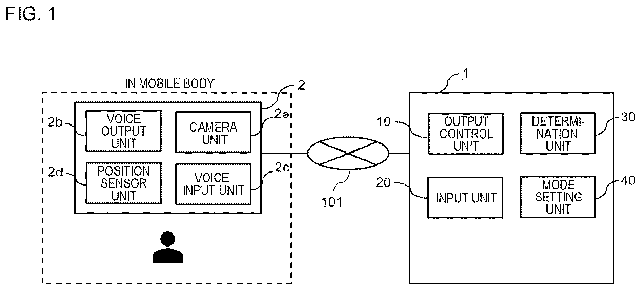

Fig. 1 is a block diagram showing an outline of an information processing device 1 according to a first embodiment. The information processing device 1 will be described with reference to Fig. 1. In the first embodiment, the information processing device 1 is installed outside a vehicle. The information processing device 1 may be a so-called cloud server.

In the first embodiment, the information processing device 1 has a voice recognition function. The information processing device 1 receives a predetermined command (for example, route guidance or search) as voice information and executes processing corresponding to the command. The predetermined command is, for example, "display a route to the nearest station" or "look for the nearest parking lot". The information processing device 1 receives the command as voice information and executes processing corresponding to the command (displaying a route to the nearest station or looking for the nearest parking lot).

The information processing device 1 operates as a voice recognition device when a first keyword is detected. In other words, when the first keyword is detected, the information processing device 1 receives voice information uttered after the first keyword as a predetermined command. The first keyword is a so-called wake-up word (= trigger word). The wake-up word is a keyword necessary for causing the information processing device 1 to execute a predetermined command (to execute a voice recognition process). For example, in a case where "A" is registered as the first keyword, when a driver utters "A, look for a parking lot nearby", the information processing device 1 receives "look for a parking lot nearby" (the voice information uttered after the first keyword) as a predetermined command.

### (In-Mobile Body Device 2)

A mobile body is equipped with an in-mobile body device 2. The in-mobile body device 2 may be brought in from outside the mobile body or may be pre-attached to the mobile body. In the first embodiment, the mobile body is a vehicle. The in-mobile body device 2 includes a camera unit 2a, a voice output unit 2b, a voice input unit 2c, and a position sensor unit 2d. Although not shown, the in-mobile body device 2 may include a display.

The camera unit 2a includes an in-camera and an out-camera (not shown). The in-camera faces inside the vehicle, and at least a driver's seat is included in an imaging range. The in-camera captures the interior of the vehicle so that the driver is visible. Alternatively, the in-camera may capture the entire interior of the vehicle so that occupants (driver and passenger) are visible. The out-camera faces outside the vehicle. The out-camera captures a scene outside the vehicle.

In the first embodiment, the voice output unit 2b includes a speaker (not shown). The voice output unit 2b outputs mechanical voice from the speaker.

The voice input unit 2c includes at least one microphone (not shown). A voice uttered by the occupant is input to the voice input unit 2c. The occupants include a driver and a passenger.

The position sensor unit 2d acquires position information of the mobile body using, for example, a Global Navigation Satellite System (GNSS).

The in-mobile body device 2 is configured to communicate with the information processing device 1 through a communication network 101. The communication network 101 includes, for example, communication over a 4G or 5G line. The in-mobile body device 2 is configured to include a vehicle external vehicle communication unit (not shown) for configuring the communication network 101.

### (Output Control Unit 10)

The information processing device 1 includes an output control unit 10, an input unit 20, a determination unit 30, and a mode setting unit 40. The output control unit 10 outputs question information. In the first embodiment, the output control unit 10 outputs the question information to the voice output unit 2b of the in-mobile body device 2. The question information is information regarding the presence or absence of a passenger in the mobile body. The question information is information for the driver to check whether or not there is a passenger in the mobile body, such as "Are you going out alone today?" or "Is there anyone with you?". In the first embodiment, the output control unit 10 outputs the question information as a voice, but may also output the question information to a display provided in the in-mobile body device 2.

### (Input Unit 20)

Answer information is input to the input unit 20. In the first embodiment, the voice information input to the voice input unit 2c of the in-mobile body device 2 is input to the input unit 20 as the answer information. The answer information is information regarding an answer of the occupant to the question information. For example, in a case where the question information is "Are you going out alone today?", an answer to the question information, such as "No, I am going out with four family members" or "Yes, I am alone", is the answer information.

### (Determination Unit 30)

The determination unit 30 determines whether or not there is a passenger in the mobile body by using the answer information. In a case where the answer information includes information suggesting that there is a passenger in the mobile body, the determination unit 30 determines that there is a passenger in the mobile body. Specifically, in a case where the question information of "Are you going out alone today?" is output from the voice output unit 2b and the voice information of "No, I am going out with four family members" is input to the input unit 20 as the answer information, the determination unit 30 determines that there is passenger in the mobile body.

### (Mode Setting Unit 40, and First Mode and Second Mode)

The mode setting unit 40 determines which of a first mode or a second mode is to be applied, by using a determination result of the determination unit 30. The first mode is a mode in which the information processing device 1 operates as the voice recognition device when the first keyword is detected. In other words, the first mode is a mode in which the information processing device 1 receives the voice information uttered after the first keyword as a predetermined command when the information processing device 1 detects the first keyword.

A specific example will be described in which "A" is registered as the first keyword and a command of "look for a parking lot near the mobile body" is registered as the predetermined command. In this case, when the driver utters "A, look for a parking lot nearby", the information processing device 1 receives the command of "look for a parking lot near the mobile body" and executes a process of searching for a parking lot near the mobile body. Then, the information processing device 1 outputs the search result to the voice output unit 2b.

The second mode is a mode in which the information processing device 1 operates as the voice recognition device even when the first keyword is not detected. In other words, the second mode is a mode in which the information processing device 1 operates as the voice recognition device even without the wake-up word. In the example described above, when the driver utters "look for a parking lot nearby", the information processing device 1 receives the command of "look for a parking lot near the mobile body" and executes the process of searching for a parking lot near the mobile body. As described above, in the second mode, the information processing device 1 receives the command even when the driver does not utter "A" as the first keyword.

The mode setting unit 40 applies the first mode in a case where the determination unit 30 determines that there is a passenger in the mobile body. In a case where there is one or more passengers in the mobile body, the first mode that requires the first keyword (wake-up word) is applied, thereby reducing the possibility of erroneously recognizing voices of a plurality of speakers. Therefore, it is possible to suppress the erroneous voice recognition of the information processing device 1.

The mode setting unit 40 applies the second mode when the determination unit 30 determines that there is no passenger in the mobile body. In a case where there is no passenger in the mobile body (in a case where there is only one driver), the second mode that does not require the first keyword (wake-up word) is applied, thereby saving the time and effort of inputting the wake-up word each time. As a result, the drive is made more comfortable.

In a case where the second mode is applied, the voice information of the occupant input to the voice input unit 2c continues to be uploaded to the information processing device 1, but personal information included in the voice information may be configured not to be uploaded to the information processing device 1 or to be deleted in its entirety after being uploaded to the information processing device 1.

Specifically, the in-mobile body device 2 may have a function of filtering the voice information. More specifically, for example, a configuration may be adopted in which only voice information including specific keywords ("search", "route guidance", "weather", and the like) is uploaded to the information processing device 1. Alternatively, a configuration may be adopted in which voice information that does not include specific keywords is automatically deleted by the information processing device 1.

### (Hardware Configuration Example)

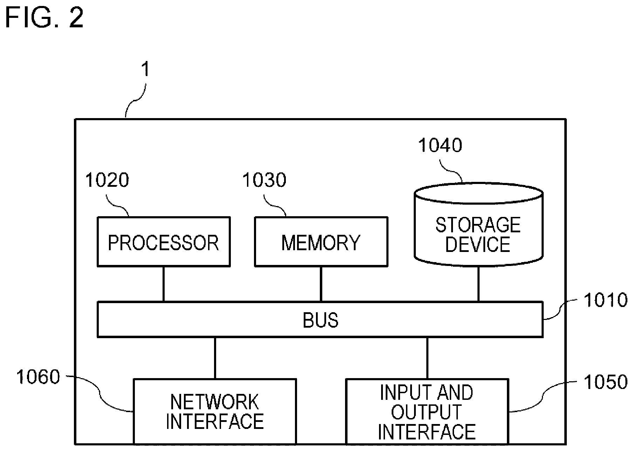

Fig. 2 is a diagram showing a hardware configuration example of the information processing device 1. The information processing device 1 includes a bus 1010, a processor 1020, a memory 1030, a storage device 1040, an input and output interface 1050, and a network interface 1060.

The bus 1010 is a data transmission path for performing transmission and reception of data between the processor 1020, the memory 1030, the storage device 1040, the input and output interface 1050, and the network interface 1060. Note that a method for connecting the processor 1020 and the like is not limited to bus connection.

The processor 1020 is a processor implemented by a central processing unit (CPU), a graphics processing unit (GPU), or the like.

The memory 1030 is a main storage device implemented using a random access memory (RAM) or the like.

The storage device 1040 is an auxiliary storage device implemented using a hard disk drive (HDD), a solid state drive (SSD), removable media such as a memory card, a read only memory (ROM), or the like, and has a recording medium. The recording medium of the storage device 1040 stores program modules that implement each function (for example, the output control unit 10, the input unit 20, the determination unit 30, and the mode setting unit 40) of the information processing device 1. The processor 1020 reads and executes each of the program modules on the memory 1030, so that each function corresponding to the program module is implemented. In addition, the storage device 1040 may function as a storage unit 3, which will be described below.

The input and output interface 1050 is an interface for connecting the information processing device 1 and various input and output devices.

The network interface 1060 is an interface for connecting the information processing device 1 to a network. The network is, for example, a local area network (LAN) or a wide area network (WAN). A method for connecting the network interface 1060 to the network may be wireless connection or wired connection. The information processing device 1 may communicate with the in-mobile body device 2 through the network interface 1060.

### (Operation Example 1)

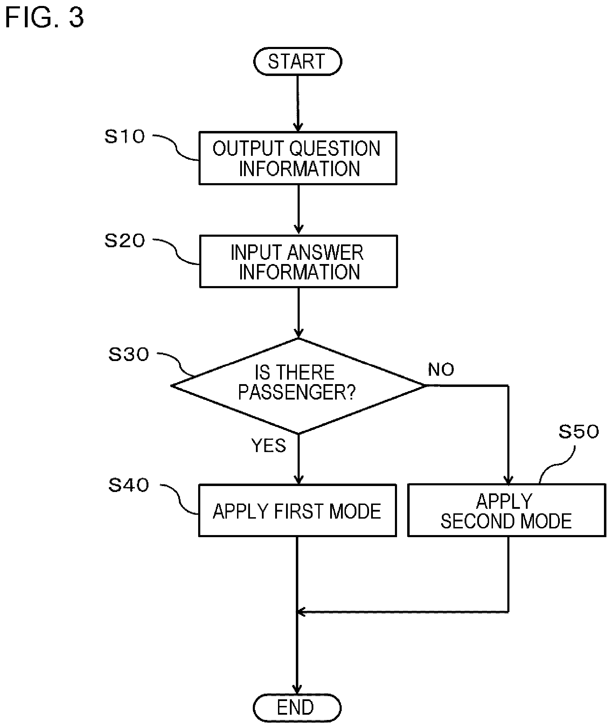

Fig. 3 is a flowchart showing a process in which the information processing device 1 according to the first embodiment applies the first mode or the second mode. In step S10, the output control unit 10 outputs the question information to the voice output unit 2b. Specifically, for example, the output control unit 10 outputs the machine voice saying "Are you going out alone today?" as the question information to the voice output unit 2b.

The timing of outputting the question information is random, and the question information may be output at the timing when the driver gets into the vehicle or at the timing when the driver starts an engine of the vehicle. In addition, the question information may be output after some time has passed since the driver drives the vehicle or after the vehicle has moved by a predetermined distance. In addition, the question information may be output at the timing of first waiting for signal after the driver starts driving (at the timing when a first stop state is detected after the vehicle moves).

In step S20, the answer information is input to the input unit 20 (voice input unit 2c). Specifically, for example, in a case where the driver responds "No" to the question information of ("Are you going out alone today?"), the input unit 20 receives the voice information of "No" as the answer information through the voice input unit 2c.

In step S30, the determination unit 30 determines whether or not there is a passenger in the vehicle by using the answer information. In the above case, the determination unit 30 determines that there is a passenger in the mobile body by using the answer information of "No" returned by the driver. In a case where the determination unit 30 determines that there is a passenger in the mobile body (YES in step S30), the process proceeds to step S40. In step S40, the mode setting unit 40 applies the first mode.

In a case where the determination unit 30 determines that there is no passenger in the mobile body (NO in step S30), the process proceeds to step S50. In step S50, the mode setting unit 40 applies the second mode.

As described above, according to the first embodiment, the determination unit 30 determines whether or not there is a passenger in the mobile body by using the answer information. As a result, it is possible to accurately determine whether or not there is a passenger in the mobile body with a simple configuration.

Further, the mode setting unit 40 according to the first embodiment determines which of the first mode or the second mode is to be applied by using the determination result of the determination unit 30. Specifically, the mode setting unit 40 applies the first mode in a case where the determination unit 30 determines that there is a passenger in the mobile body, and applies the second mode in a case where the determination unit 30 determines that there is no passenger in the mobile body.

As a result, it is possible to determine whether to omit the wake-up word depending on the presence or absence of the passenger in the mobile body. By omitting the wake-up word when there is no passenger in the mobile body, it is possible to save the time and effort of uttering the wake-up word which is normally required each time a predetermined command (look for the nearest station, set a route to the nearest parking lot, or the like) is requested. Therefore, a quick command request to the voice recognition device becomes possible. Further, there is no hassle of uttering the wake-up word, so that the drive becomes more comfortable.

By adopting a configuration in which the wake-up word is not omitted in a case where there is a passenger in the mobile body, the possibility that any of voices of a plurality of occupants is erroneously recognized by the information processing device 1 is reduced.

As described above, with the information processing device 1 according to the first embodiment, it is possible to realize a comfortable drive while suppressing the erroneous voice recognition.

### [Second Embodiment]

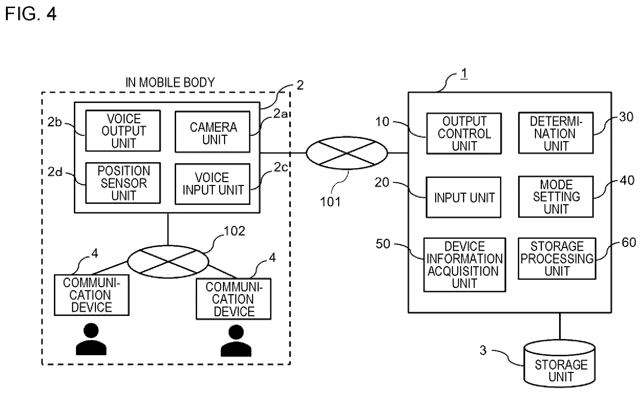

Fig. 4 is a block diagram showing an outline of the information processing device 1 according to a second embodiment. The information processing device 1 according to the second embodiment further includes a device information acquisition unit 50 and a storage processing unit 60, unlike the information processing device 1 according to the first embodiment. Further, in the second embodiment, the in-mobile body device 2 is configured to include an in-mobile body interior communication unit (not shown) for configuring a mobile body communication unit 102.

The in-mobile body device 2 is configured to communicate with a communication device 4 in the mobile body through the mobile body communication unit 102. The mobile body communication unit 102 is, for example, a wireless communication unit, and includes WiFi (registered trademark) and Bluetooth (registered trademark). The communication device 4 is a device of the occupant of the mobile body, and is a device owned, managed, carried, or used by the occupant. The communication device 4 is brought into the mobile body by the occupant.

### (Device Information Acquisition Unit 50)

The device information acquisition unit 50 acquires a plurality of pieces of device information from a plurality of the communication devices 4 in the mobile body. In the second embodiment, the device information acquisition unit 50 acquires the device information through the in-mobile body device 2.

The communication device 4 includes, for example, a smartphone, a tablet, a personal computer (PC), and a wearable device. The device information is information for identifying each communication device 4. The device information is information regarding the communication device 4. The information regarding the communication device 4 is information associated with the communication device 4, and includes, for example, a name registered on the communication device 4, a model of the device, a device ID, and a device name registered on the communication device 4. Each of the plurality of communication devices 4 can be identified by using the device information.

The device information acquisition unit 50 may determine whether or not the communication device 4 is located inside the mobile body by using radio wave intensity information regarding an intensity of a radio wave. The radio wave intensity information may be obtained using a known configuration.

The device information acquisition unit 50 may determine whether or not the communication device 4 is located inside the mobile body by comparing the device information acquired in the first state with the device information acquired in the second state. The first state is a state before the mobile body moves. Specifically, the first state is a state before the driver starts driving. The second state is a state after a predetermined time has elapsed since the mobile body moves or a state after the mobile body has moved by a predetermined distance. Specifically, the second state is a state after some time has passed since the driver starts driving.

The device information acquisition unit 50 may repeatedly acquire the device information, and determine whether or not the communication device 4 is located inside the mobile body by using device history information regarding an acquisition history of the device information. More specifically, for example, the device information acquisition unit 50 determines that the communication device 4 is located inside the mobile body in a case where the device information continuously acquired for a predetermined time (for example, 30 seconds) after the driver starts driving remains the same. The timing when the device information acquisition unit 50 starts to continuously acquire the device information may be the timing when the driver starts the engine of the vehicle, or the timing immediately after the start of driving. In addition, the device information acquisition unit 50 may continuously acquire the device information during a period from the start of the acquisition of the device information until the movement by the predetermined distance. In addition, the device information acquisition unit 50 may repeatedly acquire the device information up to immediately after the start of the driving.

In addition, in a case where the device information continuously acquired for a predetermined time after the driver starts driving includes device information different from the device information acquired immediately after the start of the acquisition of the device information, the device information acquisition unit 50 may determine that the communication device 4 related to the device information acquired immediately after the start of the acquisition of the device information is not located inside the mobile body. In addition, even in a case where the device information acquired immediately after the start of the acquisition of the device information disappears after a predetermined time has elapsed, the device information acquisition unit 50 may determine that the communication device 4 related to the device information is not located inside the mobile body.

### (Storage Processing Unit 60)

The storage processing unit 60 stores the plurality of pieces of device information and the answer information in association with each other in the storage unit 3 as mode determination information. The storage processing unit 60 stores, in the storage unit 3, the answer information input to the input unit 20 and a combination of the plurality of pieces of device information detected in the mobile body when the answer information is input.

### (Operation Example 1 of Second Embodiment)

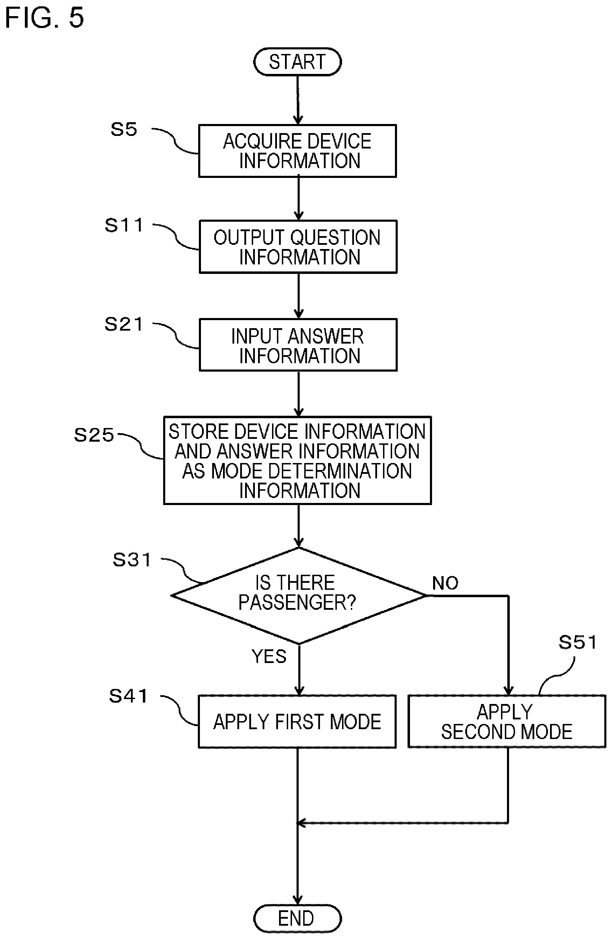

Fig. 5 is a flowchart of a process in which the storage processing unit 60 according to the second embodiment stores the mode determination information in the storage unit 3. The process in which the storage processing unit 60 stores the mode determination information in the storage unit 3 will be described with reference to Fig. 5.

In step S5, the device information acquisition unit 50 acquires the plurality of pieces of device information from the plurality of communication devices 4 in the mobile body. Steps S11 and S21 are the same as steps S10 and S20 of the first embodiment, respectively. Specifically, in step S11, the output control unit 10 outputs the question information to the voice output unit 2b, and in step S21, the answer information is input to the input unit 20 (voice input unit 2c).

The timing when the device information acquisition unit 50 acquires the device information is random. The device information acquisition unit 50 may acquire the device information after a predetermined time has elapsed since the driver starts driving the vehicle. In addition, the device information acquisition unit 50 may acquire the device information after the driver drives the vehicle by a predetermined distance. In this case, the predetermined distance may be calculated using the position information of the mobile body generated by the position sensor unit 2d. After the process of step S11, the process of step S5 may be executed.

In step S25, the storage processing unit 60 stores the plurality of pieces of device information acquired by the device information acquisition unit 50 and the answer information in association with each other in the storage unit 3 as the mode determination information. Specifically, for example, in a case where the question information of "Are you alone today?" is output in step S11 and the answer information of "No, I am going to drive with a friend" is input to the input unit 20 in step S21, the storage processing unit 60 stores a combination of the answer information, the device information of the driver, and the device information of the passenger (= friend) in the storage unit 3. After step S25, the process proceeds to step S31.

The process of step S31, the process of step S41, and the process of step S51 are the same as the process of step S30, the process of step S40, and the process of step S50 of the first embodiment, respectively.

### (Operation Example 2 of Second Embodiment)

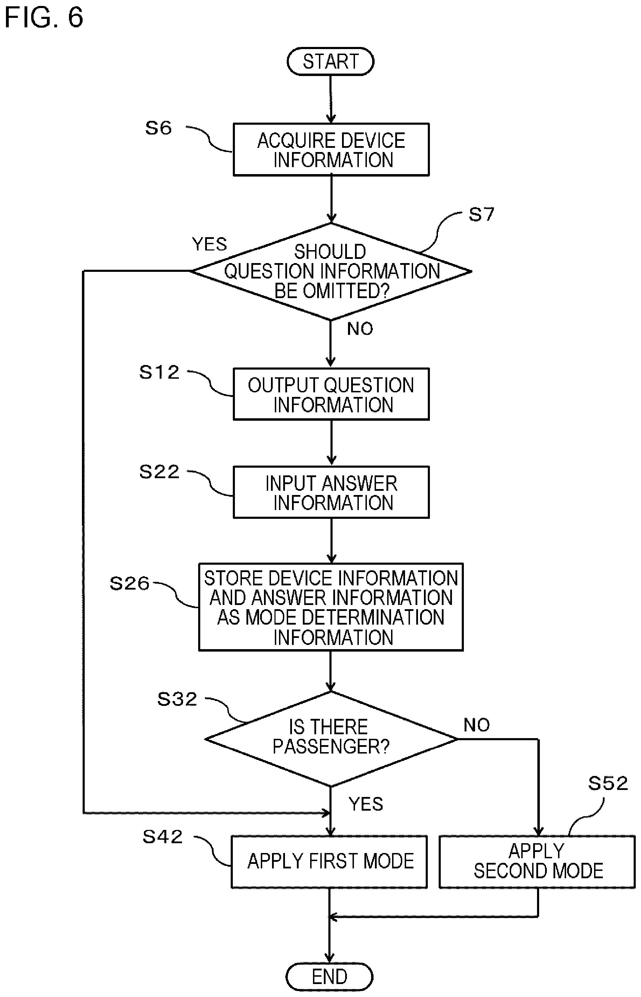

Fig. 6 is a flowchart of a process in which the information processing device 1 applies the first mode or the second mode using the mode determination information. The process of applying the first mode or the second mode using the mode determination information will be described with reference to Fig. 6. In step S6, the device information acquisition unit 50 acquires the plurality of pieces of device information from the plurality of communication devices 4 in the mobile body.

As in Operation Example 1 of the second embodiment, the timing when the device information acquisition unit 50 acquires the device information is random. The device information acquisition unit 50 may acquire the device information immediately after the start of driving, or the device information acquisition unit 50 may acquire the device information after a predetermined time has elapsed since the driver starts driving. In addition, the device information acquisition unit 50 may acquire the device information after a predetermined time has elapsed since the driver starts the engine of the vehicle. In addition, the device information acquisition unit 50 may acquire the device information after the driver drives the vehicle by a predetermined distance.

Next, in step S7, the mode setting unit 40 determines whether to omit the question information by using the plurality of pieces of device information and the mode determination information stored in advance in the storage unit 3. Specifically, the mode setting unit 40 searches the storage unit 3 for a plurality of pieces of device information of the same combination as the plurality of pieces of device information acquired in step S6. Then, in a case where there is a plurality of pieces of device information of the same combination as the plurality of pieces of device information, the mode setting unit 40 acquires the plurality of pieces of device information of the same combination and the answer information associated with the plurality of pieces of device information as the mode determination information. Then, the mode setting unit 40 determines whether to omit the question information by using the mode determination information. The mode setting unit 40 determines to omit the question information when information suggesting that there is a passenger in the mobile body is included in the mode determination information. For example, in a case where the answer information included in the mode determination information is "No, I am going out with two friends", the mode setting unit 40 determines to omit the question information. In a case where the mode setting unit 40 determines to omit the question information (YES in step S7), the process proceeds to step S42.

Then, in step S42, the mode setting unit 40 applies the first mode without using the determination result (the determination result as to whether or not there is a passenger in the mobile body) of the determination unit 30.

In a case where the mode setting unit 40 determines not to omit the question information (NO in step S7), the process proceeds to step S12. The process of step S12, the process of step S22, the process of step S26, the process of step S32, the process of step S42, and the process of step S52 are the same as the process of step S11, the process of step S21, the process of step S25, the process of step S31, the process of step S41, and the process of step S51 of the second embodiment (Fig. 5), respectively.

As described above, according to the second embodiment, the information processing device 1 further includes the device information acquisition unit 50 and the storage processing unit 60, and the mode setting unit 40 according to the second embodiment uses the plurality of pieces of device information and the mode determination information stored in advance to determine whether to omit the question information. As a result, it is possible to omit the process of outputting the question information when the occupants get into the mobile body carrying the same devices as the plurality of devices stored in the past (when the same driver and passenger combination gets into the vehicle). Therefore, it is possible to save the driver from the time and effort and hassle of having to answer the question information, and to reduce the amount of information processing work required.

Further, the device information acquisition unit 50 according to the second embodiment may determine whether or not the communication device 4 is located inside the mobile body by using radio wave intensity information regarding an intensity of a radio wave. As a result, it is possible to easily determine whether or not the communication device 4 is located inside the mobile body. Therefore, it is possible to suppress erroneous acquisition of device information regarding a communication device located outside the mobile body.

Further, the device information acquisition unit 50 according to the second embodiment may determine whether or not the communication device 4 is located inside the mobile body by comparing the device information acquired in the first state with the device information acquired in the second state. The device information after some time has passed since the driver starts driving is compared with the device information before the driver starts driving to determine whether or not these pieces of device information are the same, thereby making it possible to easily determine whether or not the communication device 4 is located inside the mobile body. As a result, it is possible to reduce the possibility of erroneously acquiring device information in the vicinity of the parked vehicle.

Further, the device information acquisition unit 50 according to the second embodiment may repeatedly acquire the device information, and determine whether or not the communication device 4 is located inside the mobile body by using device history information regarding an acquisition history of the device information. For example, in a case where the device information is repeatedly acquired over a predetermined period and all the pieces of device information acquired repeatedly pertain to the same communication device, it can be said that there is a very high possibility that the communication device is located inside the mobile body. By using the device history information, it is possible to easily determine whether or not the communication device 4 is located inside the mobile body.

In a case where the device information acquisition unit 50 acquires the device information after a predetermined time has elapsed since the driver starts driving (or since the driver starts the engine of the vehicle) or after the mobile body has moved by a predetermined distance, it is possible to prevent a situation in which the device information acquisition unit 50 erroneously acquires the device information of the communication device located outside the vehicle in the vicinity of the parked vehicle.

### [Third Embodiment]

The information processing device 1 according to a third embodiment has almost the same configuration as the configuration (configuration of the information processing device 1 according to the second embodiment) shown in Fig. 4, but a part of the function of the mode setting unit 40 is different from that of the information processing device 1 according to the second embodiment. After the mode setting unit 40 according to the third embodiment applies the second mode, when the device information acquisition unit 50 detects that the number of the communication devices 4 in the mobile body has increased, the mode setting unit 40 according to the third embodiment performs switching from the second mode to the first mode.

As a result, it is possible to automatically perform switching to the first mode even in a case where a passenger joins in the middle of the drive. By immediately performing switching to the first mode that requires a wake-up word at the timing when the number of speakers becomes plural, the possibility that the information processing device 1 performs the erroneous voice recognition is reduced. Further, even in a case where the number of the passengers increases in the middle of the drive, there is no need to take the trouble of executing the process shown in Fig. 6, and the transition from the second mode to the first mode is automatically performed, thereby reducing the amount of information processing work required.

In addition, as another aspect of the third embodiment, after the mode setting unit 40 applies the first mode, when the device information acquisition unit 50 detects that the number of the communication devices 4 in the mobile body has decreased, the output control unit 10 outputs the question information again. Specifically, when the device information acquisition unit 50 detects that the number of the communication devices 4 in the mobile body has decreased, the processes after step S12 in Fig. 6 are executed.

As a result, even though there is at least one passenger at the beginning of the drive but the number of the passengers decreases from the middle of the drive and the driver is alone, the transition to the second mode is smoothly performed. Therefore, the drive can be made more comfortable.

### [Fourth Embodiment]

The information processing device 1 according to a fourth embodiment has almost the same configuration as the configuration (configuration of the information processing device 1 according to the second embodiment) shown in Fig. 4, but a part of the functions of the input unit 20 and the storage processing unit 60 is different from that of the information processing device 1 according to the second embodiment.

When a second keyword is input into the input unit 20 according to the fourth embodiment, the storage processing unit 60 erases specific mode determination information. The second keyword is an optional word and may be preset or newly set by the driver. The specific mode determination information is optional mode determination information stored in the storage unit 3.

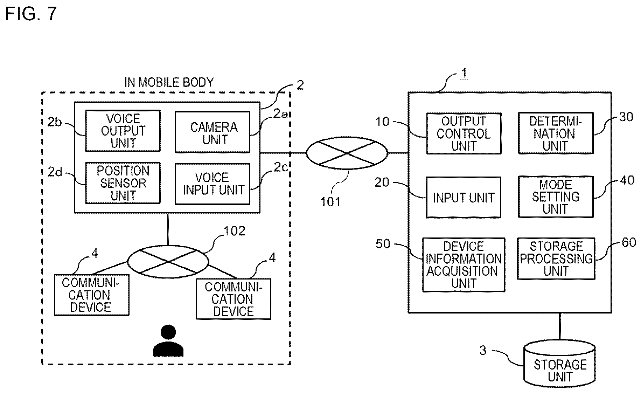

Fig. 7 is a block diagram describing functions of the input unit 20 and the storage processing unit 60 according to the fourth embodiment. The block diagram of Fig. 7 is almost the same as the block diagram of Fig. 4, but the number of devices with respect to the number of the occupants is different (in Fig. 4, there are two communication devices 4 for two occupants, and in Fig. 7, there are two communication devices 4 for one occupant). The functions of the input unit 20 and the storage processing unit 60 according to the fourth embodiment will be described in detail with reference to Figs. 4 and 7.

For example, when a driver who owns two communication devices 4 gets into the vehicle with a child (corresponding to the situation in Fig. 4), the answer information of "No" is input to the input unit 20 in response to the question information of "Are you alone today?", and the storage processing unit 60 stores a combination of the answer information and pieces of the device information of the two communication devices 4 in the storage unit 3.

Then, when the driver next brings the same two communication devices 4 as the previously stored communication devices 4 into the vehicle without bringing a child (corresponding to the situation in Fig. 7), the mode determination information stored in the past (the combination of the answer information and the pieces of device information of the two communication devices 4) is adopted by the mode setting unit 40, and the question information is omitted and the transition to the first mode is automatically performed even though there is no passenger (child) and only one driver this time.

However, when the storage processing unit 60 has the function of erasing specific mode determination information, it is possible to erase the mode determination information stored in the past. Therefore, the correct mode determination information can be stored again.

In addition, as another aspect of the fourth embodiment, when a third keyword is input to the input unit 20, the output control unit 10 may output the question information again. Specifically, when the third keyword is input to the input unit 20, the processes after step S12 of Fig. 6 (or step S11 of Fig. 5) may be executed. The third keyword is an optional word and may be preset or newly set by the driver.

As a result, even in a case where the driver erroneously inputs the answer information, the process can be executed again as shown in Fig. 6 (or Fig. 5). As a result, it is possible to switch to the correct (driver intended) mode. Further, the correct mode determination information can be stored anew.

### (Other Modification Examples)

A combination of the plurality of communication devices and the answer information may be manually stored in the storage unit 3 in advance. Then, the mode setting unit 40 may determine whether to omit the question information by using the plurality of pieces of device information acquired by the device information acquisition unit 50 and the information on the combination stored manually in advance.

Although the embodiments have been described above with reference to the drawings, these are examples of the present invention, and various configurations other than the above can also be adopted.

The information processing device 1 may be mounted in the mobile body. In addition, in the embodiments, the information processing device 1 may include the in-mobile body device 2. In this case, the in-mobile body device 2 (= the information processing device 1) includes the output control unit 10, the input unit 20, the determination unit 30, and the mode setting unit 40 in addition to the camera unit 2a, the voice output unit 2b, the voice input unit 2c, and the position sensor unit 2d.

In a case where the driver turns off the engine after the second mode shown in Fig. 3 is applied, the process of Fig. 3 may be executed again. In this case, the wording of the question information may be changed or may remain unchanged.

Hereinafter, descriptions for examples of reference forms are appended.
1. An information processing device including:
   an output control unit configured to output question information regarding presence or absence of a passenger in a mobile body;
   an input unit configured to receive answer information regarding an answer of an occupant to the question information;
   a determination unit configured to determine whether or not there is a passenger in the mobile body by using the answer information; and
   a mode setting unit configured to determine, by using a determination result of the determination unit, which of a first mode in which the information processing device operates as a voice recognition device when a first keyword is detected or a second mode in which the information processing device operates as the voice recognition device even when the first keyword is not detected is to be applied.
2. The information processing device according to the above (1.) item,
   in which the mode setting unit is configured to apply the first mode in a case where the determination unit determines that there is a passenger in the mobile body, and to apply the second mode in a case where the determination unit determines that there is no passenger in the mobile body.
3. The information processing device according to the above (1.) or (2.) item, further including:
   a device information acquisition unit configured to acquire a plurality of pieces of device information regarding a plurality of communication devices in the mobile body; and
   a storage processing unit configured to store the plurality of pieces of device information and the answer information in association with each other as mode determination information,
   in which the mode setting unit uses the plurality of pieces of device information and the mode determination information stored in advance to determine whether or not to omit the question information, and
   in a case where the mode setting unit determines to omit the question information, the mode setting unit applies the first mode without using the determination result of the determination unit.
4. The information processing device according to any one of the above (1.) to (3.) items, further including:
   a device information acquisition unit configured to acquire a plurality of pieces of device information regarding a plurality of communication devices in the mobile body,
   in which after the mode setting unit applies the second mode, when the device information acquisition unit detects that the number of the communication devices in the mobile body has increased, the mode setting unit performs switching from the second mode to the first mode.
5. The information processing device according to the above (4.) item,
   in which after the mode setting unit applies the first mode, when the device information acquisition unit detects that the number of the communication devices in the mobile body has decreased, the output control unit outputs the question information again.
6. The information processing device according to any one of the above (3.) to (5.) items,
   in which the device information acquisition unit uses radio wave intensity information regarding an intensity of a radio wave to determine whether or not the communication device is located inside the mobile body.
7. The information processing device according to any one of the above (3.) to (6.) items,
   in which a state before the mobile body moves is defined as a first state, and a state after a predetermined time has elapsed since the mobile body moves or a state after the mobile body has moved by a predetermined distance is defined as a second state, and
   the device information acquisition unit determines whether or not the communication device is located inside the mobile body by comparing the device information acquired in the first state with the device information acquired in the second state.
8. The information processing device according to any one of the above (3.) to (7.) items,
   in which the device information acquisition unit repeatedly acquires the device information, and determines whether or not the communication device is located inside the mobile body by using device history information regarding an acquisition history of the device information.
9. The information processing device according to any one of the above (3.) to (8.) items,
   in which the storage processing unit erases a specific mode determination information when a second keyword is input to the input unit.
10. The information processing device according to any one of the above (1.) to (9.) items,
   in which the output control unit outputs the question information again when a third keyword is input to the input unit.
11. An information processing method executed by a computer that implements an information processing device, the method including:
   outputting question information regarding presence or absence of a passenger in a mobile body;
   receiving answer information regarding an answer of an occupant to the question information;
   determining whether or not there is a passenger in the mobile body by using the answer information; and
   determining, by using a determination result as to whether or not there is a passenger in the mobile body, which of a first mode in which the information processing device operates as a voice recognition device when a predetermined keyword is detected or a second mode in which the information processing device operates as the voice recognition device even when the keyword is not detected is to be applied.
12. A program for causing a computer that implements an information processing device to execute:
   a processing of outputting question information regarding presence or absence of a passenger in a mobile body;
   a procedure of receiving answer information regarding an answer of an occupant to the question information;
   a procedure of determining whether or not there is a passenger in the mobile body by using the answer information; and
   a procedure of determining, by using a determination result as to whether or not there is a passenger in the mobile body, which of a first mode in which the information processing device operates as a voice recognition device when a predetermined keyword is detected or a second mode in which the information processing device operates as the voice recognition device even when the keyword is not detected is to be applied.

This application claims priority based on Japanese Patent Application No. 2022-158479 filed on September 30, 2022, and the disclosure of which is incorporated herein in its entirety by reference.

### REFERENCE SIGNS LIST

1 information processing device
2 in-mobile body device
2a camera unit
2b voice output unit
2c voice input unit
2d position sensor unit
3 storage unit
4 communication device
10 output control unit
20 input unit
30 determination unit
40 mode setting unit
50 device information acquisition unit
60 storage processing unit

## Claims

1. An information processing device comprising:
an output control unit configured to output question information regarding presence or absence of a passenger in a mobile body;
an input unit configured to receive answer information regarding an answer of an occupant to the question information;
a determination unit configured to determine whether or not there is a passenger in the mobile body by using the answer information; and
a mode setting unit configured to determine, by using a determination result of the determination unit, which of a first mode in which the information processing device operates as a voice recognition device when a first keyword is detected or a second mode in which the information processing device operates as the voice recognition device even when the first keyword is not detected is to be applied.

2. The information processing device according to Claim 1,
wherein the mode setting unit is configured to apply the first mode in a case where the determination unit determines that there is a passenger in the mobile body, and to apply the second mode in a case where the determination unit determines that there is no passenger in the mobile body.

3. The information processing device according to Claim 1 or 2, further comprising:
a device information acquisition unit configured to acquire a plurality of pieces of device information regarding a plurality of communication devices in the mobile body; and
a storage processing unit configured to store the plurality of pieces of device information and the answer information in association with each other as mode determination information,
wherein the mode setting unit uses the plurality of pieces of device information and the mode determination information stored in advance to determine whether or not to omit the question information, and
in a case where the mode setting unit determines to omit the question information, the mode setting unit applies the first mode without using the determination result of the determination unit.

4. The information processing device according to Claim 1 or 2, further comprising:
a device information acquisition unit configured to acquire a plurality of pieces of device information regarding a plurality of communication devices in the mobile body,
wherein after the mode setting unit applies the second mode, when the device information acquisition unit detects that the number of the communication devices in the mobile body has increased, the mode setting unit performs switching from the second mode to the first mode.

5. The information processing device according to Claim 4,
wherein after the mode setting unit applies the first mode, when the device information acquisition unit detects that the number of the communication devices in the mobile body has decreased, the output control unit outputs the question information again.

6. The information processing device according to Claim 3,
wherein the device information acquisition unit uses radio wave intensity information regarding an intensity of a radio wave to determine whether or not the communication device is located inside the mobile body.

7. The information processing device according to Claim 3,
wherein a state before the mobile body moves is defined as a first state, and a state after a predetermined time has elapsed since the mobile body moves or a state after the mobile body has moved by a predetermined distance is defined as a second state, and
the device information acquisition unit determines whether or not the communication device is located inside the mobile body by comparing the device information acquired in the first state with the device information acquired in the second state.

8. The information processing device according to Claim 3,
wherein the device information acquisition unit repeatedly acquires the device information, and determines whether or not the communication device is located inside the mobile body by using device history information regarding an acquisition history of the device information.

9. The information processing device according to Claim 3,
wherein the storage processing unit erases a specific mode determination information when a second keyword is input to the input unit.

10. The information processing device according to Claim 1 or 2,
wherein the output control unit outputs the question information again when a third keyword is input to the input unit.

11. An information processing method executed by a computer that implements an information processing device, the method comprising:
outputting question information regarding presence or absence of a passenger in a mobile body;
receiving answer information regarding an answer of an occupant to the question information;
determining whether or not there is a passenger in the mobile body by using the answer information; and
determining, by using a determination result as to whether or not there is a passenger in the mobile body, which of a first mode in which the information processing device operates as a voice recognition device when a predetermined keyword is detected or a second mode in which the information processing device operates as the voice recognition device even when the keyword is not detected is to be applied.

12. A program for causing a computer that implements an information processing device to execute:
a processing of outputting question information regarding presence or absence of a passenger in a mobile body;
a procedure of receiving answer information regarding an answer of an occupant to the question information;
a procedure of determining whether or not there is a passenger in the mobile body by using the answer information; and
a procedure of determining, by using a determination result as to whether or not there is a passenger in the mobile body, which of a first mode in which the information processing device operates as a voice recognition device when a predetermined keyword is detected or a second mode in which the information processing device operates as the voice recognition device even when the keyword is not detected is to be applied.
